# FASCICULE DE BREVET EUROPEEN

(11) **EP 0 621 879 B1**
(45) Date de publication et mention de la délivrance du brevet: **27.03.2002**
(21) Numéro de dépôt: 93904078.8
(22) Date de dépôt: 13.01.1993
(51) Int. Cl.: C08G 59/18, C08J 3/24, C08J 5/24

(54) **COMPOSITION DE RESINE EPOXY ET APPLICATIONS, EN PARTICULIER DANS LES STRUCTURES COMPOSITES**
EPOXYDHARZZUSAMMENSETZUNGEN UND IHRE VERWENDUNGEN, INSBESONDERE FÜR VERBUNDWERKSTOFFE
EPOXY RESIN COMPOSITION AND USES THEREOF, PARTICULARLY IN COMPOSITE STRUCTURES

(30) Priorité: 15.01.1992 FR 9200368
(43) Date de publication de la demande: 02.11.1994
(73) Titulaire: Vantico AG, 4057 Basel (CH)
(72) Inventeur: BLANC, Isabelle, F-69003 Lyon (FR); EYRIEY, Françoise, F-69800 St-Priest (FR); GAMBERT, Xavier, F-69100 Villeurbanne (FR)
(74) Mandataire: Phélip, Bruno
(86) Numéro de dépôt international: FR9300032
(87) Numéro de publication internationale: WO9314136

(56) Documents cités:
- FR-A- 2 041 977
- FR-A- 2 065 185
- US-A- 4 423 094
- CHEMICAL ABSTRACTS, vol. 85, no. 6, 9 Août 1976, Columbus, Ohio, US; abstract no. 34750q, 'Powdered epoxy resin compositions for coating materials' page 97 ; cité dans la demande

## Description

L'invention appartient au domaine des structures composites comprenant une résine époxy.

Il est bien connu dans la technique que les compositions de résine époxy trouvent une application très intéressante pour lier ou imprégner des matériaux variés, tels que des textures fibreuses, des matières alvéolaires, par exemple des mousses rigides, semi-rigides ou souples, ainsi que d'autres matériaux de renfort semi-façonnés, tels que les nids d'abeilles. Les techniques de fabrication des structures composites sont également connues. on utilise fréquemment des matières pré-imprégnées avec une résine de même type que celle mise en oeuvre dans la fabrication de la structure composite définitive. Les conditions pratiques de moulage sont assez variables. Il existe, en effet, des systèmes de résines pour les moulages haute ou basse pression, par exemple sous un vide partiel, pour favoriser la pénétration de la résine dans le renfort.

D'autres systèmes sont mis en oeuvre, suivant la technique dite de "stratification au contact". Dans ce cas les couches successives de renfort sont imprégnées au fur et à mesure de leur dépose dans le moule et aucune pression n'est nécessaire lors de la polymérisation. Toutes ces notions sont bien connues dans la technique, et n'ont donc pas besoin d'être développées davantage.

L'homme du métier sait cependant qu'il est difficile de formuler des compositions de résine époxy possédant toutes les propriétés souhaitables pour être appliquées dans la fabrication des structures composites. Parmi les paramètres qui sont considérés comme importants, on peut citer d'abord la durée de vie du système de résine. On entend par durée de vie, l'intervalle de temps maximal, garanti par le fournisseur de la résine ou du renfort pré-imprêgné de résine, pendant lequel le produit est adapté à la réalisation d'une structure composite, c'est-à-dire conserve les caractéristiques de manipulation et les performances mécaniques après polymérisation ou durcissement. ce paramètre est très important, notamment si l'on doit fabriquer des pièces de très grandes dimensions impliquant de longues durées de manipulation, surtout si la température est relativement élevée, par exemple de 25 à 30°C.

Un autre paramètre est la tenue en environnement humide de la structure composite après polymérisation.

Elle se caractérise par la quantité d'eau susceptible d'être absorbée par le composite ainsi que par les caractéristiques thermomécaniques de celui-ci (comme la température de transition vitreuse, par exemple) une fois que le degré de saturation a été atteint dans les conditions d'humidité considérées.

Pour la réalisation de structures dites "sandwich", il faut aussi que la composition de résine possède un bon pouvoir d'adhésion sur les renforts, tels que les mousses synthétiques et les nids d'abeilles qu'on utilise fréquemment dans de telles structures.

Il est souhaitable également que la composition de résine époxy soit apte à être moulée dans des conditions relativement douces, c'est-à-dire à basse pression et à température modérée.

A la connaissance du demandeur, aucun des systèmes de résine à base époxy existant actuellement ne répond à l'ensemble des conditions évoquées ci-dessus pour la réalisation de structures composites. Les systèmes connus pour stratification au contact ont une durée de vie très faible (quelques heures) et des performances médiocres en milieu humide. Les systèmes dits "Wet-pregs" n'ont qu'une durée de vie de quelques jours et leurs propriétés en milieu humide sont mauvaises. D'autres compositions existantes, à base de résine époxy, ont une durée de vie satisfaisante mais leur polymérisation ou durcissement doit être réalisé à des températures relativement élevées (par exemple au-delà de 85°C). Elles n'adhèrent que faiblement sur les renforts tels que mousses ou nids d'abeilles, et leurs performances en milieu humide restent médiocres.

On citera ci-après des documents illustrant la technique antérieure dans le domaine de l'invention.

Le brevet US-A-4.423.094 décrit une composition de résine époxy destinée à être appliquée sur des outils pour leur conférer une résistance superficielle améliorée. Une telle composition contient à cet effet une charge de dureté très élevée. Son durcissement est réalisé de manière traditionnelle en faisant agir successivement une amine aliphatique à température ambiante puis un imidazole à température élevée. Les deux durcisseurs agissent l'un après l'autre et les propriétés de la résine ne lui permettent pas de remplir l'ensemble des exigences précitées.

Le brevet FR-A-2.041.977 concerne l'obtention d'articles moulés en résine époxy par un procédé faisant intervenir successivement deux durcisseurs, une première opération de moulage à basse température fournissant un objet moulé flexible, qui est ensuite démoulé et soumis à un traitement thermique à température plus élevée pour fournir un solide rigide. Ce procédé en deux étapes aboutit à des produits complètement durcis.

Le brevet FR-A-2.065.185 a pour objet une composition de résine époxy comportant un durcisseur unique de type polyamine, qui doit être chauffé entre 120 et 160°C pour être actif. Un tel système durcisseur ne permet pas de travailler à des températures inférieures à 100°C et les structures obtenues avec de telles résines, ne répondent pas à toutes les exigences indiquées précédemment.

Le brevet JP-A-76.037.152, cité dans CHEMICAL ABSTRACTS, vol. 85, N° 6, 9 Août 1976, page 97, référence 85-347.509, est relatif à des compositions de résine époxy pulvérulentes. Le système durcisseur comprend deux composants à températures d'action différentes, qui interviennent successivement dans la préparation de la résine. La cuisson finale a lieu à température élevée (165°C) sur la poudre de résine qui est déposée par voie électrostatique sur des substrats métalliques. Les conditions de durcissement sont prévues pour une telle application et impliquent nécessairement des températures élevées. Par ailleurs, les problèmes de stabilité à température ambiante ne sont pas abordés, car ils ne se posent pas pour des résines en poudre utilisées comme films de revêtement.

La présente invention a pour objet une structure composite comprenant une résine époxy, qui permet de satisfaire simultanément à toutes les exigences pratiques de la fabrication des structures composites, tout en permettant d'atteindre des propriétés mécaniques de ces structures au moins égales à celles procurées par les compositions actuellement existantes.

La composition de résine époxy utilisée dans la structure composite possède une durée de vie dans sa forme finale supérieure à 21 jours.

La composition utilisée possède également une température de transition vitreuse, après polymérisation, supérieure à 80°C après saturation en atmosphère humide.

La composition de résine époxy utilisée possède une bonne aptitude d'adhésion, après polymérisation, sur des renforts tels que les mousses synthétiques et les nids d'abeilles, dans le but de réaliser des structures sandwich.

Avec une telle composition, on peut fabriquer des structures composites dans des conditions modérées, à savoir sous basse pression (notamment sous une pression absolue de 0,4 à 0,9 bar) et à température modérée (de l'ordre de 75°C, ou un peu supérieure, sans dépasser 120°C).

L'invention a pour objet une structure composite comprenant une résine époxy selon la revendication 1.

La résine époxy utilisée dans la structure composite selon l'invention, peut être choisie parmi une ou plusieurs des résines couramment utilisées pour la fabrication des structures composites. On peut se référer, à cet égard, à l'ouvrage Engineered Material Handbook Vol. 1, pp.66-69 Ed ASM International (1987).

D'autres caractéristiques sont indiquées aux revendications 2 à 14.

Le plus généralement la base époxy représente de 50% à 95% environ en poids de la composition, de préférence entre 65% et 90% environ en poids. La base époxy peut consister en une résine de nature unique, ou il peut s'agir aussi de mélange de résines époxy compatibles entre elles.

La ou les résines époxy peuvent aussi contenir un additif connu de l'homme du métier pour améliorer la souplesse et/ou la capacité d'adhésion sur divers matériaux. Ces additifs peuvent être notamment des polymères thermoplastiques aromatiques (polysulfone, polyéther-sulfone, par exemple) ou non aromatiques (copolymères d'acétate de vinyle par exemple) et/ou des élastomères (type copolymères du butadiène par exemple) et/ou d'autres composés connus comme compatibles avec les résines époxy.

Les résines époxy auxquelles on donne la préférence sont en particulier les DGEBA (diglycidyl éther du bis phénol A) ou les novolaques (polyglycidyl éther de phénol-formaldéhyde novolaque).

L'originalité de la composition de résine époxy réside essentiellement dans la nature de son système durcisseur. Celui-ci est la combinaison, en proportions synergiques, de deux constituants.

Le premier constituant (i) appartient à la famille des imidazoles ou des dérivés substitués de ceux-ci. De tels produits sont déjà connus et utilisés avec les résines époxy pour fournir des matières ayant une bonne tenue thermique. On peut se référer à cet égard à l'ouvrage précité sur les résines époxy ainsi qu'au brevet Japonais SHO 56-148210.

Le deuxième constituant (ii) est choisi parmi les composés polyaminés capables d'assurer le durcissement de résine époxy à une température inférieure à 75°C.

De tels composés sont bien connus: amines aromatiques, cycloaliphatiques, ou modifiées, par exemple par un groupement polyéther et on choisira préférentiellement un composé dont la durée de vie en mélange avec les résines époxy sera compatible avec les exigences indiquées plus haut.

Un composé qui a donné satisfaction est le produit disponible sur le marché sous la dénomination ANCAMINE 2014 (ANCHOR CHEMICAL).

Utilisé seul, le composé aminé ne permet pas de réaliser des structures composites possédant simultanément toutes les propriétés avantageuses décrites précédemment.

Le système durcisseur de la composition de l'invention peut également contenir d'autres durcisseurs des résines époxy, connus de l'homme du métier, comme par exemple des amines aromatiques, aliphatiques ou des anhydrides (voir Enginereed Material Handbook, déjà cité).

Toutefois, si un ou plusieurs de ces durcisseurs est utilisé, il n'agit qu'en tant qu'additif et sera donc présent en quantité largement inférieure à celle qui serait traditionnellement nécessaire pour réaliser le durcissement de la résine.

Selon l'enseignement de la présente invention, c'est le système durcisseur à deux composants qui opère principalement la polymérisation de la résine époxy.

Les proportions relatives du premier et du deuxième constituants du système durcisseur sont choisies de manière à conférer des propriétés synergiques à la résine époxy. L'ensemble des deux constituants représente le complément à 100% en poids de la quantité de la base époxy. Compte tenu des indications ci-dessus, la quantité de système durcisseur représente donc environ 5% en poids à 50% en poids du total de la composition, la fourchette de 10% à 35% environ en poids étant préférée.

Les proportions relatives du premier et du deuxième constituants du système durcisseur peuvent varier selon la nature desdits constituants et de la résine époxy. Généralement pour 100 parties en poids du système durcisseur, on utilise de 3 à 70 parties environ du constituant (i), de préférence de 25 à 70 parties environ, le complément à 100 étant formé par le constituant (ii).

On a trouvé que la combinaison des deux constituants précités, dont l'un présente une température de durcissement supérieure à 75°C avec les résines époxy, alors que l'autre possède une température de durcissement inférieure à 75°C avec la même résine, procure à elle seule, un effet synergique surprenant.

La durée de vie de la composition formulée est supérieure à 21 jours, et en général au moins égale à un mois, ce qui lui confère une longue durée d'utilisation en atelier, et permet le moulage de très grandes structures sans risque d'évolution de la viscosité.

sa tenue en atmosphère humide est tout à fait remarquable: lorsque la composition de résine est utilisée pour la réalisation de stratifiés, sa reprise d'humidité ne dépasse pas 1% en masse (après vieillissement dans l'eau à 70°C pendant 14 jours, norme ISO 75), de sorte que les performances de la structure composite après vieillissement sont pratiquement inchangées. Cette propriété est particulièrement intéressante pour les applications dans l'industrie navale.

Les compositions de résine époxy utilisées permettent la fabrication de structures composites par moulage sous basse pression (notamment de 0,4 à 0,9 bar absolu) et à des températures modérées (notamment dans la fourchette de 75 à 120°C). Leurs qualités adhésives leur permettent un collage direct sur des structures de type mousses ou nids d'abeilles.

Les propriétés mécaniques des structures composites, telles que des stratifiés, obtenues selon l'invention, sont au moins égales à celles qui sont réalisables avec les résines actuellement disponibles dans le même but.

Une application particulièrement avantageuse de l'invention consiste en la fabrication de structures stratifiées, notamment à base de renforts fibreux, en vue de fabriquer des matériaux pré-imprégnés pour l'obtention de structures composites particulièrement appréciées en construction navale.

Dans la présente description, l'expression "renforts fibreux" désigne tous types de renforts textiles tissés et/ou non tissés comprenant des matières textiles traditionnelles et/ou synthétiques et/ou techniques, telles que verre, polyester, polyamide, aramide, carbone, silicium et autres.

Les renforts autres que les matières fibreuses, destinés à la réalisation de structures composites avec les résines époxy, sont choisis parmi n'importe lesquels des renforts connus de l'homme du métier à cet effet. Il s'agit, par exemple de mousses de polyuréthane, de poly-chlorure de vinyle, ainsi que de structures en nid d'abeilles à base de polyoléfines, d'aluminium ou de fibres aramides.

En raison de sa durée de vie élevée, la composition de résine époxy peut être formulée avec ses deux constituants et fournie dans sa totalité à un utilisateur final. Cette propriété est particulièrement avantageuse pour les produits pré-imprégés ou "prepregs".

Pour la fabrication des structures composites, les résines époxy peuvent être mises en oeuvre en imprégnation et/ou comme film de colle.

L'invention sera davantage illustrée, sans être aucunement limitée, par les exemples ci-après, dans lesquels les chiffres et proportions sont indiquées en poids.

### EXEMPLE 1 (comparaison)

On mélange dans 100 parties de résine époxy DGEBA (LY 556, CIBA-GEIGY), équivalent époxy 190g, 7 parties de dicyandiamide et 4 parties de 3-(3,4 dichlorophényl) 1-diméthyl urée (ou diuron).

Le mélange obtenu est déposé sur un tissu de verre, de manière à obtenir un pré-imprégné contenant 40% en poids de résine.

Ce pré-imprégné est laissé à température ambiante et on note l'évolution de sa pégosité (et donc de son aptitude à être transformé) avec le temps.

On constate qu'après un mois à température ambiante, la pégosité est encore acceptable.

En revanche, la polymérisation d'un tel produit ne peut intervenir qu'à une température supérieure à 90°C.

### EXEMPLE 2 (comparaison)

On réalise un produit similaire à celui de l'exemple 1 mais en remplaçant la résine époxy type DGEBA par une novolaque (EPN 1938, CIBA-GEIGY) additionnée de 7 parties de dicyandiamide et 2 parties de diuron.

Le pré-imprégné obtenu présente sensiblement les mêmes caractéristiques de durée de vie et de durcissement que dans l'exemple 1.

### EXEMPLES 3, 4, 5

On opère comme dans les exemples 1 et 2 mais en utilisant un système durcisseur conforme à l'invention selon les indications se trouvant dans le Tableau I.

Les pré-imprégé obtenus ont une durée de vie supérieure à un mois et leur polymérisation est possible à partir de 75°C.

Le tableau II donne les caractéristiques de systèmes de résine et pré-imprégnés commercialisés qui présentent une température de polymérisation inférieure égale à 75°C mais avec une durée de vie très faible. On y a également indiqué les valeurs correspondantes des compositions des exemples.

Le tableau III compare les exemples 1 et 2 (témoins) avec les exemples 3 à 5 réalisés suivant l'invention.

on voit que les résultats obtenus par les exemples 3 à 5 sont bien meilleurs que ceux obtenus avec un système durcisseur classique:
- la reprise en eau est divisée au moins par 2,
- la température de transition vitreuse après vieillissement humide est sensiblement supérieure.

Les exemples ci-dessus illustrent l'utilisation des compositions de résine époxy avec des tissus de verre permettant notamment de fabriquer des structures composites par stratification au contact. On a également appliqué le système durcisseur de l'invention avec des tissus de carbone ainsi qu'avec des tissus verre/carbone et on a fait des observations similaires à celles déjà acquises avec les tissus de verre.

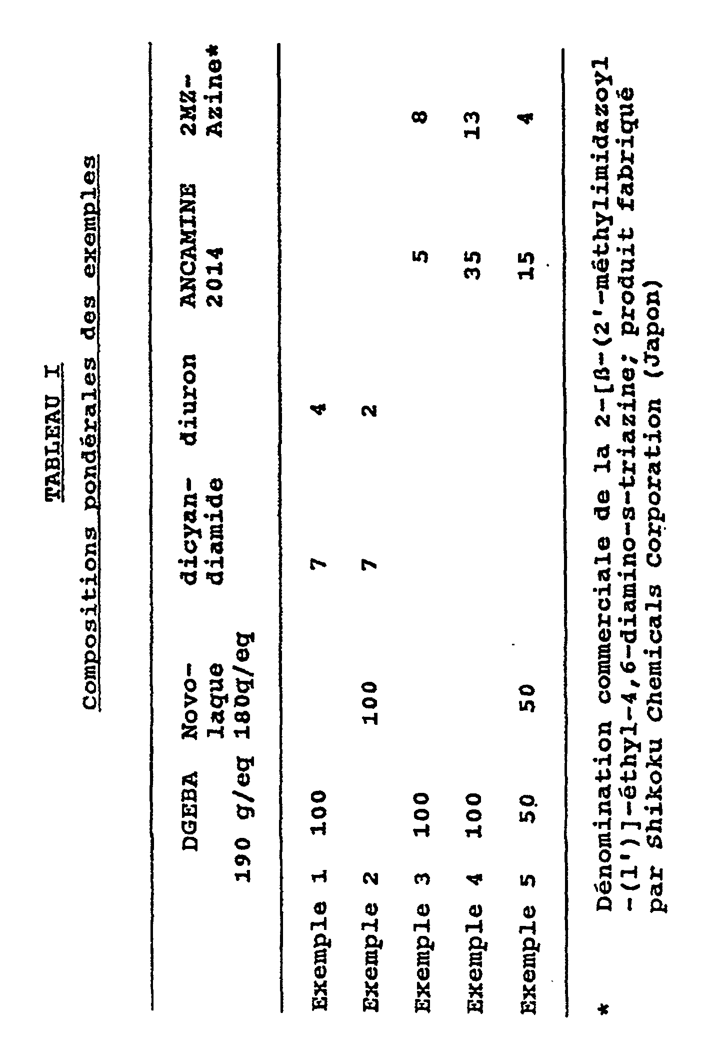

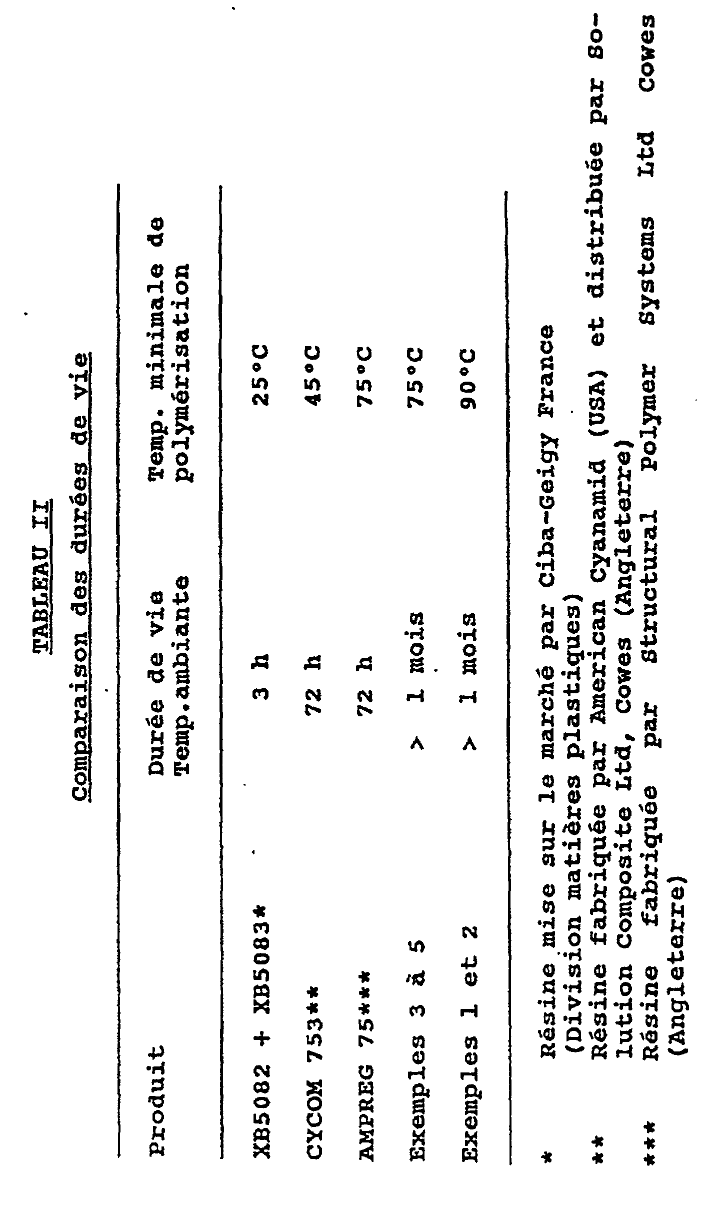

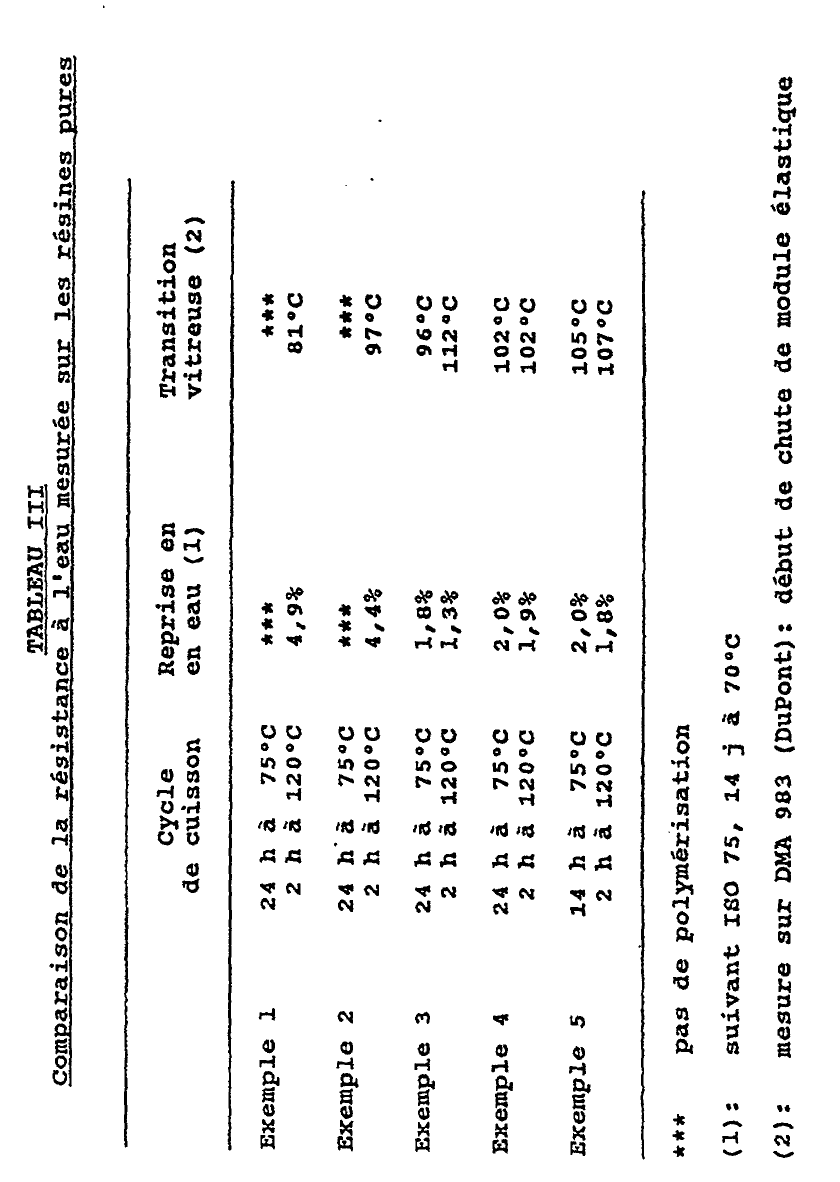

On a encore fourni ci-après un ensemble de données caractéristiques d'une résine selon l'invention, pouvant être obtenue conformément aux Exemples 3 à 5.

| Stockage | | |
|---|---|---|
| Conservation | 23°C | 1 mois |
| | - 18°C | 12 mois |

### Propriétés sur stratifiés

- Cycle de cuisson: 24 h à 75°C sous vide 0,9 bar
- Caractéristiques mécaniques (sur tissu de verre équilibré 300/mg²) 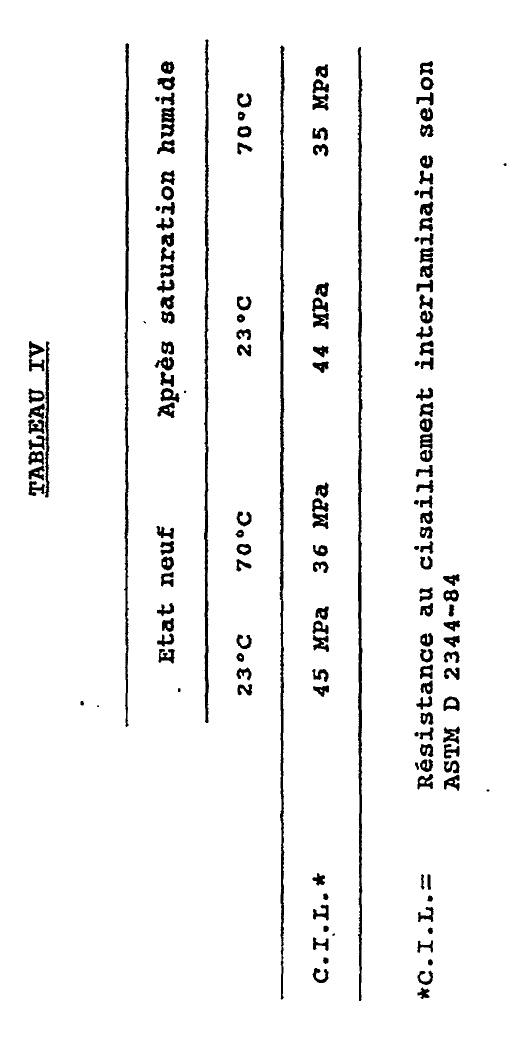
- Transition vitreuse (DMA: chute du module élastique) Après immersion de 14 jours dans l'eau à 70°C: Tg = 98°C
- Reprise en eau: 0,9%

### Propriétés sur résine pure

- Température de transition vitreuse Tg (méthode DMA: chute du module élastique)
   Cycle de cuisson : 2 h à 120°C
   Tg neuf : 130°C
   Tg vieilli (l) : 117°C
- Reprise en eau (l) : 1,6% en masse
- Densité : 1,2
- Résultats d'essai en flexion
   Contrainte : 120 MPa
   Module : 2800 MPa
   Elongation : 4%
   (l): immersion 14 jours à 70°C dans l'eau

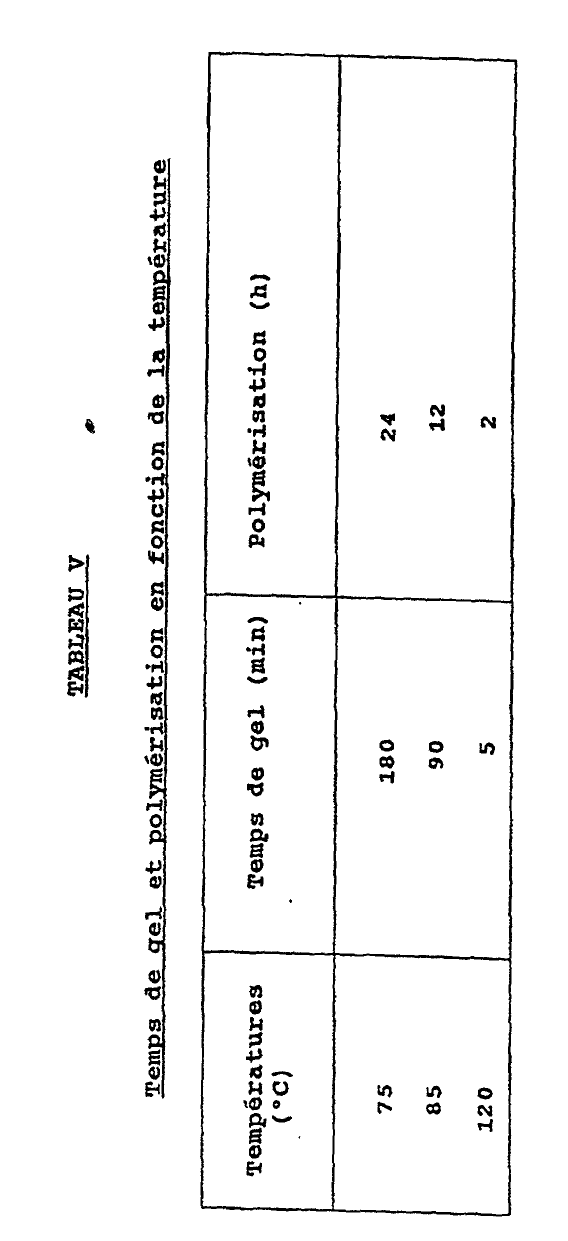

## Revendications

1. Structures composites comprenant une résine époxy durcie ou polymérisée par chauffage modéré en une étape entre 75°C et 120°C d'une composition de résine époxy dans laquelle le système durcisseur comprend la combinaison de :
(i) au moins un imidazole qui, seul, ne peut assurer la polymérisation de la résine époxy qu'à une température supérieure à 75°C environ,
(ii) au moins un composé polyaminé qui, seul, permet la polymérisation de la résine époxy à une température inférieure à 75°C environ,
la quantité de système durcisseur représentant 5 à 50% en poids du total de la composition, la durée d'utilisation en atelier de la composition formulée étant supérieure à 21 jours à température ambiante et la reprise en eau de la composition, mesurée suivant la norme ISO 75, 14 jours à 70°C, étant au plus de 2%.

2. Structures composites selon la revendication 1, **caractérisées en ce que** la base époxy représente de 50% à 95% en poids de la composition de résine, de préférence entre 65% et 90% en poids de la composition.

3. Structures composites selon l'une des revendications 1 ou 2, **caractérisées en ce que** la base époxy consiste en une résine unique ou en un mélange de résines époxy compatibles entre elles.

4. Structures composites selon l'une quelconque des revendications 1 à 3, **caractérisées en ce que** la base époxy contient un additif permettant d'améliorer la souplesse et/ou la capacité d'adhésion, ces additifs pouvant notamment être choisis parmi les polymères thermoplastiques aromatiques, de type polysulfone ou polyéthersulfone, ou non aromatiques, tels que les copolymères d'acétate de vinyle, et/ou des élastomères, du type des copolymères du butadiène et/ou autres additifs connus compatibles avec les résines époxy.

5. Structures composites selon l'une quelconque des revendications 1 à 4, **caractérisées en ce que** la résine époxy est choisie parmi les résines de diglycidyléther du bisphénol A (DGEBA) et/ou les novolaques (polyglycidyléther de phénolformaldéhyde novolaque).

6. Structures composites selon l'une quelconque des revendications 1 à 5, **caractérisées en ce que** le constituant (i) du système durcisseur appartient à la famille des imidazoles ou des dérivés substitués de ceux-ci.

7. Structures composites selon l'une quelconque des revendications 1 à 6, **caractérisées en ce que** le deuxième constituant (ii) du système durcisseur est choisi parmi les amines aromatiques, cycloaliphatiques ou modifiées.

8. Structures composites selon l'une quelconque des revendications 1 à 7, **caractérisées en ce que** la quantité de système durcisseur représente de 10% à 35% environ en poids de la composition de résine.

9. Structures composites selon l'une quelconque des revendications 1 à 8, **caractérisées en ce que**, pour 100 parties en poids du système durcisseur, le constituant (i) représente de 3 à 70 parties environ, le complément à 100 étant formé par le constituant (ii).

10. Structures composites selon l'une quelconque des revendications 1 à 9, obtenues par moulage sous basse pression, notamment de 0,4 à 0,9 bar absolu.

11. Structures composites selon l'une quelconque des revendications 1 à 10 sous forme de stratifiés dont la reprise d'humidité ne dépasse pas 1% en masse, la mesure étant faite après vieillissement dans l'eau à 70°C pendant 14 jours, selon la norme ISO 75.

12. Structures composites stratifiées selon l'une quelconque des revendications 1 à 11, **caractérisées en ce qu'**elles comportent des renforts fibreux, du type des renforts textiles utilisés dans les matériaux composites, à savoir des renforts textiles tissés et/ou non tissés, comprenant des matières textiles traditionnelles et/ou synthétiques et/ou techniques, telles que verre, polyester, polyamide, aramide, carbone, silicium et autres.

13. Structures composites selon l'une quelconque des revendications 1 à 9, obtenues par imprégnation et/ou collage à l'aide de la composition de résine époxy définie dans lesdites revendications, de renforts conventionnels pour la fabrication de matériaux composites, lesdits renforts étant choisis notamment parmi les mousses, telles que les mousses de polyuréthanne ou de polychlorure de vinyle, ainsi que les structures en nid d'abeilles, notamment à base de polyoléfines, d'aluminium ou de fibres aramides.

14. Structures composites selon l'une quelconque des revendications 1 à 13, utilisables dans la construction navale.

## Patentansprüche

1. Verbundstrukturen, die ein Epoxidharz umfassen, das durch mäßiges Erwärmen einer Epoxidharzzusammensetzung auf zwischen 75 °C und 120 °C in einem Schritt gehärtet oder polymerisiert wurde, wobei das Härtungssystem eine Kombination umfasst von:
(i) wenigstens einem Imidazol, das allein die Polymerisation des Epoxidharzes erst bei einer Temperatur oberhalb ungefähr 75 °C gewährleisten kann;
(ii) wenigstens einer Polyaminverbindung, die allein die Polymerisation des Epoxidharzes bei einer Temperatur unterhalb ungefähr 75 °C gewährleisten kann;
wobei die Menge des Härtungssystems 5 bis 50 Gew.-% der gesamten Zusammensetzung ausmacht, die Topfzeit der zubereiteten Zusammensetzung bei Raumtemperatur über 21 Tage beträgt und die Wasseraufnahme der Zusammensetzung, die gemäß der Norm ISO 75 nach 14 Tagen bei 70 °C gemessen wird, über 2% beträgt.

2. Verbundstrukturen gemäß Anspruch 1, **dadurch gekennzeichnet, dass** die Epoxidharzbasis 50 bis 95 Gew.-% der Harzzusammensetzung, vorzugsweise zwischen 65 und 90 Gew.-% der Zusammensetzung, ausmacht.

3. Verbundstrukturen gemäß einem der Ansprüche 1 oder 2, **dadurch gekennzeichnet, dass** die Epoxidharzbasis aus einem einzigen Harz oder aus einem Gemisch von untereinander verträglichen Epoxidharzen besteht.

4. Verbundstrukturen gemäß einem der Ansprüche 1 bis 3, **dadurch gekennzeichnet, dass** die Epoxidharzbasis ein Additiv enthält, das es ermöglicht, die Biegsamkeit und/oder das Haftungsvermögen zu verbessern, wobei diese Additive insbesondere aus aromatischen thermoplastischen Polymeren des Polysulfon- oder Polyethersulfon-Typs oder nichtaromatischen thermoplastischen Polymeren, wie Vinylacetat-Copolymeren, und/oder Elastomeren des Typs der Butadien-Copolymere und/oder anderen Additiven, die als mit den Epoxidharzen verträglich bekannt sind, ausgewählt sein können.

5. Verbundstrukturen gemäß einem der Ansprüche 1 bis 4, **dadurch gekennzeichnet, dass** das Epoxidharz aus Bisphenol-A-diglycidylether-Harzen (DGEBA) und/oder Novolakharzen (Novolakphenolformaldehydpolyglycidylether) ausgewählt ist.

6. Verbundstrukturen gemäß einem der Ansprüche 1 bis 5, **dadurch gekennzeichnet, dass** der Bestandteil (i) des Härtungssystems zur Gruppe der Imidazole und ihrer substituierten Derivate gehört.

7. Verbundstrukturen gemäß einem der Ansprüche 1 bis 6, **dadurch gekennzeichnet, dass** der zweite Bestandteil (ii) des Härtungssystems aus aromatischen, cycloaliphatischen oder modifizierten Aminen ausgewählt ist.

8. Verbundstrukturen gemäß einem der Ansprüche 1 bis 7, **dadurch gekennzeichnet, dass** die Menge des Härtungssystems ungefähr 10 bis 35 Gew.-% der Harzzusammensetzung ausmacht.

9. Verbundstrukturen gemäß einem der Ansprüche 1 bis 8, **dadurch gekennzeichnet, dass** der Bestandteil (i) ungefähr 3 bis 70 Teile von 100 Gewichtsteilen des Härtungssystems ausmacht, wobei der Rest auf 100 durch den Bestandteil (ii) gebildet wird.

10. Verbundstrukturen gemäß einem der Ansprüche 1 bis 9, die durch Niederdruckformen, insbesondere unter 0,4 bis 0,9 bar absolut, erhalten werden.

11. Verbundstrukturen gemäß einem der Ansprüche 1 bis 10 in Form von Schichtpressstoffen, deren Feuchtigkeitsaufnahme 1 Massen-% nicht überschreitet, wobei die Messung nach 14 Tagen Alterung in Wasser bei 70 °C gemäß der Norm ISO 75 erfolgt.

12. Schichtpressstoff-Verbundstrukturen gemäß einem der Ansprüche 1 bis 11, **dadurch gekennzeichnet, dass** sie Faserverstärkungen des Typs der Textilverstärkungen, die in Verbundstoffen verwendet werden, umfassen, und zwar gewebte und/oder ungewebte Textilverstärkungen, die herkömmliche und/oder synthetische und/oder technische Textilstoffe, wie Glas, Polyester, Polyamid, Aramid, Kohlenstoff, Silicium und andere, umfassen.

13. Verbundstrukturen gemäß einem der Ansprüche 1 bis 9, die erhalten werden durch Imprägnierung und/oder Verklebung von herkömmlichen Verstärkungen für die Herstellung von Verbundstoffen mit Hilfe der in den genannten Ansprüchen definierten Epoxidharzzusammensetzung, wobei die Verstärkungen insbesondere aus Schaumstoffen, wie Polyurethanoder Polyvinylchlorid-Schaumstoffen, sowie Wabenstrukturen, insbesondere auf Basis von Polyolefinen, Aluminium oder Aramidfasern, ausgewählt sind.

14. Verbundstrukturen gemäß einem der Ansprüche 1 bis 13, die beim Schiffsbau verwendet werden können.

## Claims

1. Composite structures comprising an expoxy resin cured or polymerized by a one step moderate heating between 75°C and 120°C of an epoxy resin composition wherein the curing system comprises a combination of:
(i) at least an imidazole which, alone, can cause the polymerization of the epoxy resin at a temperature above about 75°C ;
(ii) at least a polyamine compound which, alone, leads to the polymerization of the epoxy resin at a temperature lower than about 75°C,
the amount of the curing system being 5 % to 50 % based on the weight of the whole composition, the workshop use time of the formulated composition being higher than 21 days at room temperature and the water uptake of the composition measured to the standard ISO 75 14 days at 70°C being at most 2 %.

2. Composite structures according to claim 1, **characterized in that** the epoxy base represents from about 50 % to 95 % by weight of the resin composition, preferably between about 65 % and 90 % by weight of the composition.

3. Composite structures according to one of claims 1 or 2, **characterized in that** the epoxy base consists of a single resin or a mixture of mutually compatible epoxy resins.

4. Composite structures according to any one of claims 1 to 3, **characterized in that** the epoxy base contains an additive to improve the flexibility and/or the adhesion capacity, these additives being in particular selected from the thermoplastic aromatic polymers, of the polysulfone or polyether-sulfone type, or non-aromatic polymers, such as the vinyl acetate copolymers, and/or the elastomers, of the butadiene copolymer-kind, and/or other additives known to be compatible with epoxy resins.

5. Composite structures according to any one of claims 1 to 4, **characterized in that** the epoxy resin is selected from the diglycidyl ether of bisphenol A resins (DGEBA) and/or the novolacs (polyglycidyl ether of phenol-formaldehyde novolac).

6. Composite structures according to any one of claims 1 to 5, **characterized in that** constituent (i) of the curing system belongs to the family of the imidazoles or their substituted derivatives.

7. Composite structures according to any one of claims 1 to 6, **characterized in that** the second constituent (ii) of the curing system is selected from the aromatic, cycloaliphatic or modified amines.

8. Composite structures according to any one of claims 1 to 7, **characterized in that** the quantity of curing system represents from about 10 % by weight to 35 % by weight of the resin composition.

9. Composite structures according to any one of claims 1 to 8, **characterized in that**, for 100 parts by weight of the curing system, constituent (i) represents from about 3 to 70 parts, the balance to 100 being given by constituent (ii).

10. Composite structures according to any one of claims 1 to 9, obtained by low pressure molding particularly at 0.4 to 0.9 bar absolute.

11. Composite structures according to any one of claims 1 to 10, as laminated structures the uptake of humidity of which does not exceed 1 % by weight, the measurement being made after ageing in water at 70°C for 14 days according to the standard ISO 75.

12. Laminated composite structures according to any one of claims 1 to 11, **characterized in that** they comprise fibrous reinforcements, of the kind of the textile reinforcements used in composite materials, that is woven and/or nonwoven textile reinforcements, comprising conventional and/or synthetic and/or technical textile materials, such as glass, polyester, polyamide, aramid, carbon, silicon and others.

13. Composite structures according to any one of claims 1 to 9 obtained by impregnation or glueing with the epoxy resin composition defined in said claims of conventional reinforcements for making composite materials, said reinforcements being selected particularly from forms such as polyurethane or polyvinyl chloride foams as well as honeycomb structures, particularly polyolefines, aluminum or arachid fibers.

14. Composite structures according to any one of claims 1 to 13, usable in the field of shipbuilding.
